# EUROPÄISCHE PATENTSCHRIFT

(11) **EP 3 844 986 B1**
(45) Veröffentlichungstag und Bekanntmachung des Hinweises auf die Patenterteilung: **11.02.2026**
(21) Anmeldenummer: 19753025.6
(22) Anmeldetag: 08.08.2019
(51) Int. Cl.: H04B 1/3822, H04B 1/401, H04W 4/40

(54) **V2X-KOMMUNIKATIONSEINHEIT UND EIGENFAHRZEUG MIT EINER DERARTIGEN V2X-KOMMUNIKATIONSEINHEIT**
V2X COMMMUNICATION UNIT AND TRANSMITTING VEHICLE COMPRISING SUCH A V2X COMMUNICATION UNIT
UNITÉ DE COMMUNICATION V2X ET VÉHICULE PERSONNEL MUNI DE LADITE UNITÉ DE COMMUNICATION V2X

(30) Priorität: 29.08.2018 DE 102018121059
(43) Veröffentlichungstag der Anmeldung: 07.07.2021
(73) Patentinhaber: ZF CV Systems Europe BV, 1170 Brussels (BE)
(72) Erfinder: DIECKMANN, Thomas, 30982 Pattensen (DE); HÜBNER, Sören, 26316 Varel (DE); WERLE, Tobias, 30171 Hannover (DE)
(74) Vertreter: Rabe, Dirk-Heinrich
(86) Internationale Anmeldenummer: PCT/EP2019/071314
(87) Internationale Veröffentlichungsnummer: WO 2020/043455

(56) Entgegenhaltungen:
- EP-A1- 3 090 922
- EP-A1- 3 090 922
- WO-A1-2018/064179
- WO-A1-2018/064179
- WO-A1-2018/074708
- WO-A1-2018/074708
- DE-B4- 102005 058 628
- US-A1- 2012 089 319
- US-A1- 2012 089 319
- US-A1- 2019 260 485
- US-A1- 2019 260 485

## Beschreibung

Die Erfindung betrifft eine V2X-Kommunikationseinheit sowie ein Eigenfahrzeug, insbesondere Nutzfahrzeug, mit einer derartigen V2X-Kommunikationseinheit.

Es ist bekannt, dass sich mehrere Fahrzeuge aufeinander abgestimmt in einem Fahrzeugverbund bzw. Platoon auf einer Fahrbahn in kurzen Abständen hintereinander bewegen können, um durch einen verringerten Luftwiderstand Kraftstoff zu sparen. Dazu können die heute üblichen Sicherheitsabstände zwischen den einzelnen Fahrzeugen dieses Fahrzeugverbundes (Platoon) unterschritten werden, wenn sich die Fahrzeuge untereinander über eine drahtlose V2X-Kommunikation koordinieren und dadurch ihre Reaktionszeiten verkürzen.

Die V2X-Kommunikation wird dabei durch ein V2X-Modul ermöglicht, das in den jeweiligen Fahrzeugen des Fahrzeugverbundes installiert ist. Das V2X-Modul weist hierbei eine Steuereinheit, eine Empfangseinheit und eine Sendeeinheit auf und ist mit mindestens einer Antenne verbunden. Über die Antenne können V2X-Signale aus der Umgebung empfangen und in die Umgebung abgegeben werden. Die V2X-Signale werden hierbei zwischen Fahrzeugen (V2V) und/oder zwischen Fahrzeugen und Infrastruktureinrichtungen (V2I) berührungslos übertragen. Die Empfangseinheit verarbeitet die empfangenen V2X-Signale und die Sendeeinheit erzeugt entsprechende V2X-Signale zur Übertragung in die Umgebung. Die Steuereinheit steuert das V2X-Modul. Beispielhaft ist ein solcher Aufbau in DE 102014220107 A1 oder JP 2017022497A2 gezeigt.

Herkömmlicherweise wird das V2X-Modul an einer beliebigen Stelle im Eigenfahrzeug montiert und die Antenne außen an dem Eigenfahrzeug angebracht, so dass eine zuverlässige Übertragung der V2X-Signale zwischen den Fahrzeugen bzw. zwischen dem Eigenfahrzeug und Infrastruktureinrichtungen ermöglicht wird. Bei langen Eigenfahrzeugen, insbesondere Sattelzügen, LKWs mit Deichselanhängern, etc. wird das V2X-Modul zentral im Zugfahrzeug installiert, wobei entweder eine Antenne mittig auf dem Dach oder zwei Antennen beidseitig am Zugfahrzeug angeordnet sein können. Eine Anordnung mit lediglich einer Antenne am Zugfahrzeug eines längeren Eigenfahrzeuges ist beispielsweise in SE 1750416 A1 gezeigt. Durch das Vorsehen von zwei seitlichen Antennen kann ein Verdeckungsbereich neben und hinter dem Eigenfahrzeug, in dem eine Übertragung der V2X-Signale durch den Anhänger und dessen Beladung beeinträchtigt ist, minimiert werden.

Nachteilig ist jedoch, dass durch die Länge des Eigenfahrzeuges, dem Material des Anhängers sowie dessen Beladung immer ein gewisser Verdeckungsbereich verbleiben wird, in dem die Signalqualität der V2X-Signale eingeschränkt ist. Dadurch kann eine sichere und zuverlässige Datenübertragung über die V2X-Kommunikation nicht sichergestellt werden und demnach ein sicherer Fahrbetrieb z.B. in einem Platooning-Modus nicht gewährleistet werden, da relevante Daten unter Umständen nicht übertragen werden können.

Aus der WO 2018/074708 A1 ist ein Verfahren und eine Vorrichtung zum Messen von Störungen bekannt, um eine Kommunikation in einem drahtlosen Kommunikationssystem durchzuführen, bei dem mehrere Transceiver-Einheiten für die Kommunikation eingesetzt werden können.

In der WO 2018/064179 A1 werden Geräte und Verfahren für die Fahrzeug-zu-Alles-(V2X)-Kommunikation beschrieben. Ein V2X-Benutzergerät (V2X-UE) kann eine Verarbeitungsschaltung beinhalten, die angeordnet ist, um einen ersten Transceiver einer Vielzahl von Transceivern zu konfigurieren. Eine Entfernung zu den mehreren V2X-Kommunikationsknoten und eine Signalstärkecharakteristik für jeden der mehreren V2X-Kommunikationsknoten wird basierend auf empfangenen Geostandortinformationen bestimmt. Eine Untermenge von V2X-Kommunikationsknoten wird basierend darauf ausgewählt, dass die bestimmte Entfernung innerhalb einer Schwellenentfernung liegt und die bestimmte Signalstärkecharakteristik für jeden der Vielzahl von V2X-Kommunikationsknoten innerhalb einer Schwellensignalstärke liegt.

Aus der US2012/0089319A1 ist ein Verfahren und System bekannt, mit dem eine relative Position zwischen einem Egofahrzeug und einem Zielfahrzeug bestimmt wird auf Basis von GPS-Daten.

Aus der EP3090922A1 ist ein Verfahren zur Lenkung eines von einem Zugfahrzeug gezogenen Anhängers mit wenigstens einer lenkbaren Achse und/oder Zugdeichsel offenbart.

Aufgabe der Erfindung ist daher, eine V2X-Kommunikationseinheit bereitzustellen, mit der eine sichere drahtlose Übertragung von Daten mit einer koordinierten Datenweiterleitung auch in längeren Eigenfahrzeugen ermöglicht wird. Weiterhin ist Aufgabe der Erfindung, ein Eigenfahrzeug bereitzustellen.

Diese Aufgabe wird durch eine V2X-Kommunikationseinheit nach Anspruch 1 sowie ein Fahrzeug nach dem weiteren unabhängigen Anspruch 11 gelöst.

Die Unteransprüche geben bevorzugte Weiterbildungen an.

Erfindungsgemäß ist demnach vorgesehen, dass die V2X-Kommunikationseinheit mindestens zwei örtlich getrennte V2X-Module und ein Logikmodul aufweist, wobei das Logikmodul ausgebildet ist, die mindestens zwei V2X-Module derartig logisch zu verknüpfen, dass eine logische Einheit aus den mindestens zwei V2X-Modulen mit einem kombinierten bzw. erweiterten Sende- und Empfangsbereich ausgebildet wird, in dem die die Daten aufweisenden V2X-Signale gesendet und/oder empfangen werden können.

Als logische Einheit wird im Rahmen der Erfindung verstanden, dass die mindestens zwei V2X-Module als für sich unabhängige Einheiten von dem Logikmodul verknüpft werden, so dass eine aufeinander abgestimmte Auswertung und/oder Übermittlung von Daten stattfinden kann. Somit werden die V2X-Module nicht unabhängig voneinander als zwei eigenständige Einheiten betrieben, sondern vielmehr abhängig voneinander. Dies kann anhand von gewissen Kriterien erfolgen, die angeben, welche Daten von welchem V2X-Modul in der aktuellen Umfeldsituation verwendet werden sollen, um eine zuverlässige Datenübertragung, d.h. senden und/oder empfangen von V2X-Signalen, zu ermöglichen.

Vorteilhafterweise kann dadurch also bereits erreicht werden, dass nicht mehr nur auf die Daten und die Funktionalitäten eines V2X-Moduls zurückgegriffen werden kann, sondern mindestens zwei örtlich getrennte V2X-Module zur Verfügung stehen. Dadurch kann die Zuverlässigkeit bei der Informations- bzw. Datenübertragung gesteigert werden, da bei Ausfällen, mangelnder Erreichbarkeit aufgrund von zu hoher Reichweiten oder bei niedriger Signalqualität auf ein weiteres örtlich getrenntes V2X-Modul zurückgegriffen werden kann, um die Funktionalitäten auszuführen. Somit kann die räumliche Ausdehnung bzw. Erreichbarkeit der einzelnen Sende- und Empfangsbereiche erweitert werden.

Die V2X-Kommunikationseinheit, die zum drahtlosen Senden und/oder Empfangen von Daten aufweisenden V2X-Signalen in einem Eigenfahrzeug, insbesondere Nutzfahrzeug vorgesehen ist, weist demnach mindestens zwei V2X-Module auf, wobei jedes V2X-Modul mit mindestens einer Antenne verbunden ist zum Senden und/oder Empfangen der V2X-Signale in einem der jeweiligen Antenne zugeordneten Sende- und Empfangsbereich. Durch die Verknüpfung der mindestens zwei V2X-Module werden demnach auch die Sende- und Empfangsbereiche zu einem kombinierten Sende- und Empfangsbereich verknüpft. Vorzugsweise ist demnach vorgesehen, dass das Logikmodul die mindestens zwei V2X-Module derartig logisch verknüpft, dass ein kombinierter Sende- und Empfangsbereich ausgebildet wird, der gegenüber den mindestens zwei einzelnen Sende- und Empfangsbereichen erweitert ist und damit einen größeren Bereich in der Umgebung abdeckt. Vorzugsweise kann dazu weiterhin vorgesehen sein, dass jedes V2X-Modul mit weiteren Antennen verbunden ist, um den kombinierten Sende- und Empfangsbereich zu erweitern.

Ein V2X-Modul weist dabei mindestens auf:
- eine Sendeeinheit zum Modulieren von über die V2X-Signale zu sendenden Daten, und/oder
- eine Empfangseinheit zum Demodulieren von über die V2X-Signale empfangenen Daten, und
- eine Datenschnittstelle zum Übertragen von über das V2X-Signal zu sendenden und/oder empfangenen Daten.

Somit bildet jedes V2X-Modul eine für sich funktionierende Einheit aus, die über das Logikmodul mit anderen funktionierenden V2X-Modulen zu einer logischen Einheit verknüpft wird.

Gemäß einer bevorzugten Weiterbildung ist vorgesehen, dass die mindestens zwei V2X-Module mittels der Datenschnittstellen über eine Datenverbindung mittelbar oder unmittelbar miteinander verbunden sind zum Übertragen der Daten zwischen den mindestens zwei V2X-Modulen. Demnach ist eine entsprechend ausgeführte Datenverbindung vorgesehen, die beispielsweise im Eigenfahrzeug die Länge des Eigenfahrzeuges überbrücken kann, in dem die V2X-Module räumlich beabstandet voneinander angeordnet sind. Somit wird eine verlässliche Verbindung bereitgestellt, die den Sende- und Empfangsbereich der V2X-Kommunkationseinheit erweitert, da der von der Datenverbindung überbrückte Bereich nicht zwangsläufig von der V2X-Kommunikation zu überbrücken ist. Über diese Datenverbindung können dann Daten ausgetauscht werden, falls nur ein V2X-Modul in der Lage ist, V2X-Signale aus der Umgebung in seinem eigenen Sende- und Empfangsbereich zu senden oder zu empfangen.

Dabei kann vorzugsweise vorgesehen sein, dass die Datenverbindung eine drahtlose Datenverbindung und/oder eine drahtgebundene Datenverbindung ist. Dadurch kann in einfacher Weise eine bereits im Eigenfahrzeug vorhandene Datenverbindung, z.B. eine Ethernetverbindung, für die Datenübertragung genutzt werden oder mit der drahtlosen Datenverbindung eine einfache Nachrüstung ermöglicht werden.

Gemäß einer bevorzugten Weiterbildung ist vorgesehen, dass das Logikmodul über die Datenverbindung mit mindestens einem der mindestens zwei V2X-Module mittelbar oder unmittelbar verbunden ist zum logischen Verknüpfen der mindestens zwei V2X-Module über die Datenverbindung. Demnach können die mindestens zwei V2X-Module von der Logikeinheit über die Datenverbindung koordiniert werden, indem dieses beispielsweise die über die Datenübertragung übertragenen Daten überwacht und auswertet, um festzulegen, welche Daten nutzbar sind und logisch verknüpft werden können.

Gemäß einer bevorzugten Weiterbildung ist außerdem vorgesehen, dass das Logikmodul Bestandteil eines der mindestens zwei V2X-Module ist, vorzugsweise Bestandteil einer Steuereinheit des jeweiligen V2X-Moduls. Die Logikeinheit kann dazu beispielsweise eine Hardware- und/oder Softwareerweiterung im jeweiligen V2X-Modul sein, was einen geringen Montage- und Platzaufwand zur Folge hat.

Gemäß einer bevorzugten Weiterbildung ist vorgesehen, dass das Logikmodul ausgebildet ist, die zu sendenden und/oder die empfangenen Daten der mindestens zwei V2X-Module zu fusionieren und als fusionierte Daten auszugeben zum logischen Verknüpfen der mindestens zwei V2X-Module. Dadurch kann die Informationsdichte und -qualität erhöht werden bzw. Ausfälle und Signalfehler korrigiert werden, wenn die mindestens zwei V2X-Module zumindest noch Daten liefern. Die fusionierten Daten können dann über das V2X-Signal ausgesendet werden oder aber im Eigenfahrzeug selbst verwendet werden.

Gemäß einer bevorzugten Weiterbildung kann vorgesehen sein, dass das Logikmodul ausgebildet ist, die zu sendenden und/oder die empfangenen Daten der mindestens zwei V2X-Module in Abhängigkeit einer Signalstärke auszuwählen und zum Weiterverarbeiten auszugeben zum logischen Verknüpfen der mindestens zwei V2X-Module. Demnach kann vorteilhafterweise geprüft werden, welches der V2X-Module zuverlässige Daten liefert und die Daten dieses bzw. dieser V2X-Module weiterverwendet werden, beispielsweise zum Überragung über das V2X-Signal oder zur Verwendung im Eigenfahrzeug. Sind mehrere V2X-Module funktionstüchtig, kann eine Fusion der Daten erfolgen, so dass auf die Daten aller V2X-Module zurückgegriffen werden kann, um diese weiterzuverarbeiten. Es kann auch vorgesehen sein, dass unterschiedliche V2X-Module unterschiedliche Daten liefern, weil beispielsweise jedes V2X-Modul V2X-Signale von unterschiedlichen Quellen in der Umgebung empfängt oder ausgesendete V2X-Signale unterschiedliche Empfänger hat. Dies kann vom Logikmodul erkannt und bei der Verarbeitung entsprechend berücksichtigt werden, indem beispielsweise eine Verknüpfung der unterschiedlichen Daten zum Erhöhen der Informationsdichte stattfindet, die dann entsprechend im Eigenfahrzeug verarbeitet werden kann und/oder über das V2X-Signal an weitere Fahrzeuge in der Umgebung ausgegeben werden kann.

Gemäß einer bevorzugten Ausführungsform ist vorgesehen, dass jedes V2X-Modul eine Positionsermittlungseinrichtung aufweist, wobei die jeweilige Positionsermittlungseinrichtung ausgebildet ist, eine Position des jeweiligen V2X-Moduls und/oder der Positionsermittlungseinrichtung zu ermitteln und als Positions-Signal zur Weiterverarbeitung auszugeben. Dadurch kann auch auf mehrere Positionsinformationen zurückgriffen werden, die örtlich getrennte Positionen ermitteln, die wiederum zur Positionierung und Orientierung der V2X-Kommunikationseinheit herangezogen werden können.

Gemäß einer bevorzugten Weiterbildung ist vorgesehen, dass das Logikmodul ausgebildet ist, aus den Positions-Signalen einen Referenzpunkt zu ermitteln, wobei der Referenzpunkt zwischen den ermittelten Positionen liegt. Demnach kann eine genauere Ortung der V2X-Kommunikationseinheit bzw. eines Referenzpunktes an dieser stattfinden, wenn die Positionssignale mit einem Fehler behaftet sind, beispielsweise durch eine Mittelwertbildung aus den mehreren Positionen.

Gemäß einer bevorzugten Weiterbildung ist vorgesehen, dass das Logikmodul ausgebildet ist, aus den Positions-Signalen einen Knickwinkel eines die V2X-Kommunikationseinrichtung aufweisenden mehrgliedrigen Eigenfahrzeuges zu ermitteln. Demnach kann in Kenntnis der Geometrie des mehrgliedrigen Eigenfahrzeuges mithilfe der mehreren Positionen ein Knickwinkel in einfacher Weise zumindest abgeschätzt oder plausibilisiert werden.

Erfindungsgemäß ist weiterhin ein Eigenfahrzeug, insbesondere Nutzfahrzeug, mit einer erfindungsgemäßen V2X-Kommunikationseinheit vorgesehen, wobei ein erstes V2X-Modul und eine damit verbundene erste Antenne in einem vorderen Bereich des Eigenfahrzeuges und ein mindestens zweites V2X-Modul und eine damit verbundene mindestens zweite Antenne in einem hinteren Bereich des Eigenfahrzeuges angeordnet sind zum Ausbilden eines über das gesamte Eigenfahrzeug der Länge ausgedehnten kombinierten Sende- und Empfangsbereiches.

Damit kann in besonders einfacher Weise die Länge des Fahrzeuges durch die Datenverbindung überbrückt werden und damit der Sende- und Empfangsbereich ausgedehnt werden. Weiterhin entstehen nur sehr wenige und kleine Verdeckungsbereiche, in denen eine Übertragung von V2X-Signalen nicht möglich oder zumindest gestört ist, beispielsweise durch die Beladung des Eigenfahrzeuges und das Material des Fahrzeugaufbaus. Weiterhin können auch weiter entfernte, hinterherfahrende und vorausfahrende Fahrzeuge sowie Infrastruktureinrichtungen abseits der Fahrbahn erreicht werden.

Vorzugsweise ist dies vorgesehen bei Eigenfahrzeugen, die mindestens zwei Teilfahrzeuge aufweisen, wobei die Teilfahrzeuge gelenkig miteinander verbunden sind, wobei in jedem Teilfahrzeug mindestens ein V2X-Modul angeordnet ist. Dadurch kann vorzugsweise auch ausgenutzt werden, dass die Datenübertragung des um eine Ecke fahrenden Eigenfahrzeuges nicht durch Objekte abgeschattet wird, da das zweite gelenkig verbundene Teilfahrzeug mit seinem zweiten V2X-Modul auch noch Bereiche um das Objekt erreichen kann, die vom ersten V2X-Modul im ersten Teilfahrzeug nicht mehr erreicht werden können. Somit kann ein kombinierter Sende- und Empfangsbereich ausgebildet werden, der auch um Objekte herum ausgedehnt ist.

Weiterhin kann vorzugsweise vorgesehen sein, dass das Logikmodul der V2X-Kommunikationseinheit ausgebildet ist, aus den Positions-Signalen einen Mittelpunkt des Eigenfahrzeuges als Referenzpunkt und/oder einen Knickwinkel zwischen den beiden Teilfahrzeugen zu ermitteln. Demnach kann auch eine erweiterte Funktionalität mit den ohnehin vorhandenen V2X-Modulen erreicht werden.

Die Erfindung wird im Folgenden anhand von Zeichnungen näher erläutert. Es zeigen:
- Fig. 1: ein Eigenfahrzeug mit einer V2X-Kommunikationseinheit;
- Fig. 1a: eine Detailansicht eines V2X-Moduls; und
- Fig. 2: das Eigenfahrzeug gemäß Fig. 1 während eines Abbiegevorganges.

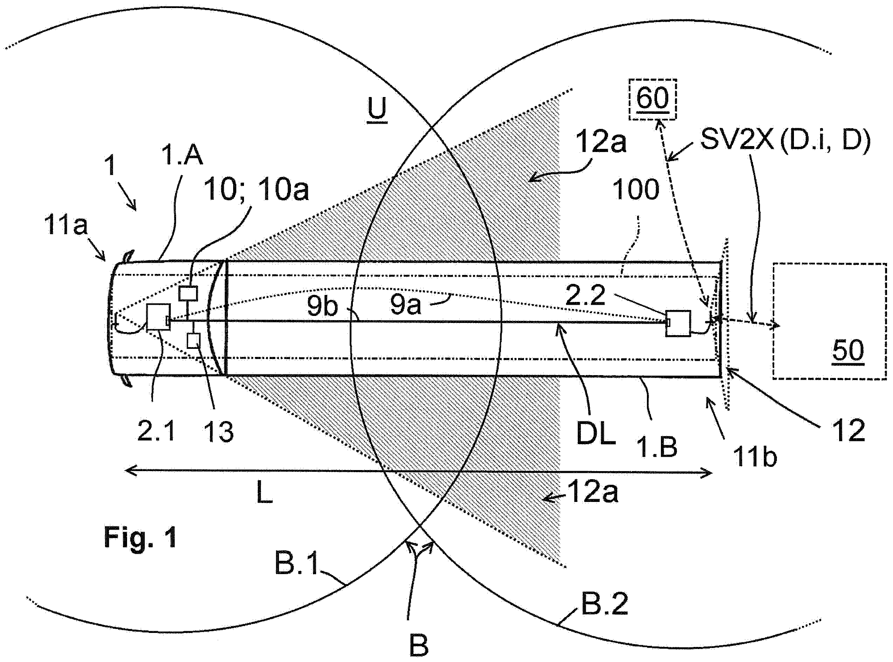

Gemäß Figur 1 ist ein Eigenfahrzeug 1 dargestellt, das gemäß diesem Ausführungsbeispiel in zwei Teilfahrzeuge 1.A, 1.B aufgeteilt ist, wobei das erste Teilfahrzeug 1.A das Zugfahrzeug (Sattelschlepper) und das zweite Teilfahrzeug 1.B der Anhänger (Sattelauflieger) des Eigenfahrzeuges 1 ist. Beide Teilfahrzeuge 1.A, 1.B sind gelenkig miteinander verbunden. Es können auch mehr als zwei Teilfahrzeuge 1.A, 1.B, ... vorhanden sein, beispielsweise bei überlangen LKWs. Weiterhin kann das Eigenfahrzeug 1 auch ein schienengebundenes Eigenfahrzeug mit einem oder mehreren Waggons oder ein Bus mit einem oder mehreren Gliedern (Gelenkbus) sein. Die Erfindung ist demnach auf beliebige Eigenfahrzeuge 1 anwendbar, wobei der Vorteil besonders bei langen Eigenfahrzeugen 1 (ein- oder mehrgliedrig) zum Tragen kommt.

Das Eigenfahrzeug 1 weist eine V2X-Kommunkationseinheit 100 auf, die gemäß Fig. 1 zwei V2X-Module 2.1, 2.2 beinhaltet, die jeweils mit einer Antenne 3.1, 3.2 verbunden sind. Das erste V2X-Modul 2.1 ist in einem vorderen Bereich 11a des Eigenfahrzeuges 1 und das zweite V2X-Modul 2.2 in einem hinteren Bereich 11b des Eigenfahrzeuges 1 angeordnet. Die V2X-Kommunikationseinheit 100 kann auch eine größere Anzahl N an V2X-Modulen 2.i mit i=1, 2, ... N mit N>2 aufweisen, wobei die V2X-Module 2.i dann über das gesamte Eigenfahrzeug 1 gleichmäßig verteilt sind.

Als V2X (Vehicle-to-Everything) wird hierbei im Rahmen der Erfindung eine drahtlose Kommunikationsmöglichkeit bezeichnet, die es einem Eigenfahrzeug 1 mit einem V2X-Modul 2.i ermöglicht, V2X-Signale SV2X über ein bestimmtes Interface bzw. gemäß einem bestimmten Protokoll bereitzustellen und/oder zu empfangen, um sich z.B. mit anderen Fahrzeugen 50 in einer Umgebung U zu koordinieren oder Informationen von Infrastruktureinrichtungen 60 in der Umgebung U zu empfangen. Verläuft eine derartige Kommunikation unmittelbar zwischen zwei Fahrzeugen 1, 50 wird sie als V2V (Vehicle-to-Vehicle) Kommunikation bezeichnet. Es ist jedoch auch eine Kommunikation zwischen einem Eigenfahrzeug 1 und einer Infrastruktureinrichtung 60 am Rande der Fahrbahn möglich, was dann als V2I (Vehicle-to-Infrastructure) Kommunikation bezeichnet wird.

Als Übertragungsart zwischen den Fahrzeugen 1, 50 bzw. dem Eigenfahrzeug 1 und der Infrastruktureinrichtung 60 kann beispielsweise eine kurzreichweitige DSRC-Verbindung (Dedicated Short-Range Communication) oder eine drahtlose Verbindung nach einem der IEEE-Standards, z.B. IEEE 802.11 (Wireless Access in Vehicular Environments (WAVE)) oder IEEE 802.11p (vgl. IEEE 802.11 Wireless LAN medium access layer (MAC)) oder IEEE802.3 (Ethernet) verwendet werden. Dabei kann das V2X-Modul 2.i beispielsweise eine Signalübertragung über WiFi, WLAN, Ultra Mobile Broadband (UMB), Bluetooth (BT), Near Field Communication (NFC), Radio-Freguency Identification (RFID), Z-wave, ZigBee, Low power Wireless Personal Area Networks (6LoWPAN), Wireless Highway Addressable Remote Transducer (HART) Protocol, Wireless Universal Serial Bus (USB) oder über optische Kommunikationsmöglichkeiten, z.B. Infrared Data Association (Ir-DA), ermöglichen. Alternativ sind aber auch Übertragungen über die (Mobilfunk)standards 3GPP LTE, LTE-Advanced, E-UTRAN, UMTS, GSM, GSM/ EDGE, WCDMA, Time Division Multiple Access (TDMA), Freguency Division Multiple Access (FDMA), Orthogonal FDMA (OFDMA), Single-Carrier FDMA (SC-FDMA), Worldwide Interoperability for Microwave Access (WiMax), Ultra Mobile Broadband (UMB), High Speed Packet Access (HSPA), Evolved Universal Terrestrial Radio Access (E-UTRA), Universal Terrestrial Radio Access (UTRA), GSM EDGE Radio Access Network (GERAN), etc. möglich.

Jedes V2X-Modul 2.i weist dazu nach Fig. 1a eine Sendeeinheit 4.i, eine Empfangseinheit 5.i, eine Steuereinheit 6.i, eine Positionsermittlungseinheit 7.i und eine Datenschnittstelle 8.i auf. Zwischen den Datenschnittstellen 8.i der beiden V2X-Module 2.1, 2.2 und ggf. weiterer nicht dargestellter V2X-Module ist eine beliebige Datenverbindung 9 ausgebildet (s. Fig. 1), so dass eine Datenübertragung zwischen den mindestens zwei V2X-Modulen 2.1, 2.2 innerhalb des Eigenfahrzeuges 1 ermöglicht wird. Die Datenverbindung 9 kann eine drahtlose Datenverbindung 9a oder eine drahtgebundene Datenverbindung 9b sein, beispielsweise eine standardisierte Netzwerkverbindung, insbesondere eine Ethernetverbindung, im Eigenfahrzeug 1, auf die auch andere Einrichtungen zurückgreifen können.

Über die Antennen 3.1, 3.2 können V2X-Signale SV2X aus einem Sende- und Empfangsbereich B.1, B.2 der Umgebung U um das Eigenfahrzeug 1 empfangen oder vom Eigenfahrzeug 1 in die Umgebung U ausgesendet werden. Die V2X-Signale SV2X können entweder von einem weiteren Fahrzeug 50 in der Umgebung U oder von einer Infrastruktureinrichtung 60 in der Umgebung U um das Eigenfahrzeug 1 ausgesendet bzw. empfangen werden. Die jeweilige Antenne 3.i ist mit der Sendeeinheit 4.i und mit der Empfangseinheit 5.i des jeweiligen V2X-Moduls 2.i verbunden. Die Sendeeinheit 4.i sorgt dafür, dass auszusendende Daten D.i derartig moduliert werden, dass sie in dem V2X-Signal SV2X über die Antenne 3.i in die Umgebung U ausgesendet werden können. Die Empfangseinheit 5.i sorgt wiederum für eine Demodulation von aus der Umgebung U empfangenen V2X-Signalen SV2X, so dass die darüber übermittelten Daten D.i im Eigenfahrzeug 1 weiterverarbeitet werden können. Die Steuereinheit 6.i steuert die einzelnen Elemente des V2X-Moduls 2.i.

Die über die Sendeeinheit 4.i bzw. die Empfangseinheit 5.i in dem V2X-Signal SV2X auszusendenden bzw. empfangenen Daten D.i können vor der Modulation bzw. nach der Demodulation über die Datenschnittstellen 8.i zu bzw. von einem Platooning-Regelsystem 10 im Eigenfahrzeug 1 übertragen werden, beispielsweise auch über die Datenverbindung 9. Dieses kann anhand der empfangenen Daten D.i die Fahrdynamik des Eigenfahrzeuges 1 koordiniert regeln und auch Daten D.i bereitstellen, die über das jeweilige V2X-Modul 2.i aus dem eigenen Eigenfahrzeug 1 an andere Fahrzeuge 50 oder die Infrastruktureinrichtungen 60 ausgegeben werden sollen. Neben dem Platooning-Regelsystem 10 sind aber auch andere Anwendungseinheiten 10a möglich, die die zu sendenden bzw. empfangenen Daten D.i im Eigenfahrzeug 1 verarbeiten.

Über die Positionsermittlungseinheit 8.i kann weiterhin eine absolute Position P.i (s. Fig. 1a) des V2X-Moduls 2.i im Raum ermittelt und ein entsprechendes Positions-Signal SP.i ausgegeben werden. Aus dem Positions-Signal SP.i lassen sich die absoluten Raumkoordinaten der Positionsermittlungseinheit 8.i bzw. des V2X-Moduls 2.i herleiten. Die Positionsermittlung kann beispielsweise über GPS, GLONASS, Galileo, Compass, etc. erfolgen. Das Positions-Signal SP.i bzw. die Position P.i kann an das Platooning-Regelsystem 10 und/oder eine weitere Anwendungseinheit 10a und/oder über das V2X-Modul 2.i in dem V2X-Signal SV2X übermittelt werden.

Der beschriebene Aufbau der V2X-Kommunikationseinheit 100 mit den zwei V2X-Modulen 2.i ermöglicht einen kombinierten bzw. koordinierten Betrieb, bei dem die beiden V2X-Module 2.i eine logische Einheit ausbilden. Dies hat den Vorteil, dass eine zusätzliche Sende- bzw. Empfangsmöglichkeit im Eigenfahrzeug 1 durch das zweite V2X-Modul 2.2 geschaffen wird, wobei beide V2X-Module 2.1, 2.2 über die gesamte Länge L des Eigenfahrzeuges 1 verteilt sind, so dass durch die V2X-Kommunukationseinheit 100 ein aus den beiden einzelnen Sende- und Empfangsbereichen B.1, B.2 kombinierter Empfangs- und Sendebereich B abgedeckt wird, der größer als der im bisherigen Stand der Technik ist.

Weiterhin kann durch die Anordnung des zweiten V2X-Moduls 2.2 im hinteren Bereich 11b des Eigenfahrzeuges 1 ein Verdeckungsbereich 12, in dem eine Übertragung der V2X-Signale SV2X durch die Ausdehnung und das Material des Anhängers 1.B beeinträchtigt ist, gegenüber dem Stand der Technik stark reduziert werden. Demnach kann der Teil-Verdeckungsbereich 12a, der vom ersten V2X-Modul 2.1 nur eingeschränkt abgedeckt werden kann, vom zweiten V2X-Modul 2.2 abgedeckt werden. Der in Fig. 1 dargestellte verbleibende Verdeckungsbereich 12 ist dann nur noch sehr klein und für die Kommunikation mit weiteren Fahrzeugen 50 oder Infrastruktureinrichtungen 60 nicht mehr relevant.

Außerdem kann durch die erfindungsgemäße V2X-Kommunikationsinheit 100 sichergestellt werden, dass auch bei einem sehr langen Eigenfahrzeug 1 noch mit dem nachfolgenden Fahrzeug 50 kommuniziert werden kann, da der Abstand zwischen dem zweiten V2X-Modul 2.2 und dem nachfolgenden Fahrzeug 50, das ebenfalls ein derartiges V2X-Modul aufweist, gering ist. Die Länge L des Eigenfahrzeuges 1 wird somit über die fahrzeuginterne Datenverbindung 9; 9a, 9b zumindest teilweise überbrückt. Kann also ein hinterherfahrendes Fahrzeug 50 oder die Infrastruktureinrichtung 60 in der Umgebung U aufgrund eines zu großen Abstandes über das erste V2X-Modul 2.1 nicht mehr erreicht werden, so kann immer noch auf das zweite V2X-Modul 2.2 zurückgegriffen werden.

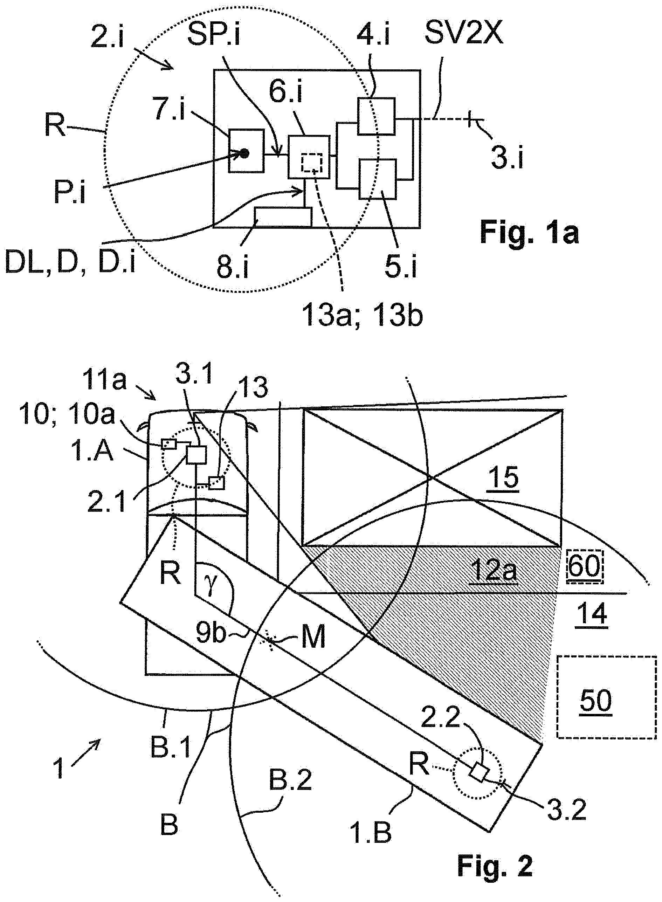

Ein weiterer Vorteil ergibt sich aus der Fig. 2. Demnach kann es beispielsweise während einer Abbiegesituation dazu kommen, dass die V2X-Kommunikation durch ein seitlich der Fahrbahn 14 angeordnetes Objekt 15, beispielsweise ein Haus, gestört wird. Von dem ersten V2X-Modul 2.1 ausgesendete V2X-Signale SV2X können dadurch nicht im Teil-Verdeckungsbereich 12a empfangen werden, in dem sich möglicherweise ein weiteres Fahrzeug 50 oder eine Infrastruktureinrichtung 60 befindet. Ebenso können von diesen (50, 60) ausgesendete V2X-Signale SV2X nicht von dem ersten V2X-Modul 2.1 empfangen werden, wenn sie sich im Teil-Verdeckungsbereich 12a befinden. Da allerdings das zweite V2X-Modul 2.2 im hinteren Bereich 11b des Eigenfahrzeuges 1 vorhanden ist, kann der Teil-Verdeckungsbereich 12a durch das zweite V2X-Modul 2.2 abgedeckt werden. Durch das Zusammenspiel der beiden V2X-Module 2.i als logische Einheit kann somit vom Zugfahrzeug 1.A aus gesehen trotz des Objektes 15 um die Ecke geschaut werden. Gleichzeitig kann bei einem Rückgriff auf das erste V2X-Modul 2.1 der Bereich vor dem Eigenfahrzeug 1 weiterhin abgedeckt werden, so dass durch eine logische Verknüpfung beider V2X-Module 2.i ein umfangreicher Sende- und Empfangsbereich B abgedeckt werden kann, der trotz des dazwischenliegenden Objektes 15 auch um die Ecke ausgedehnt ist.

Die Steuerung der logischen Einheit aus erstem und zweitem sowie ggf. weiteren V2X-Module 2.i erfolgt in einem Logikmodul 13, das über die Datenverbindung 9; 9a, 9b und/oder in anderer Weise mit den beiden V2X-Modulen 2.i über die Datenschnittstellen 8.i gekoppelt ist. Das Logikmodul 13 kann auch in einem der V2X-Module 2.i, beispielsweise in der Steuereinheit 6.i, implementiert sein, beispielsweise als Hardware- oder Softwareanpassung 13a, 13b (s. Fig. 1a). Das Logikmodul 13 prüft dabei anhand von gewissen Kriterien, über welches oder welche V2X-Module 2.i eine Übertragung (Senden und Empfangen) von Daten D.i bzw. V2X-Signalen SV2X erfolgen soll. Wird beispielsweise vom ersten V2X-Modul 2.1 nichts empfangen oder ist die Signalqualität C oder die Signalstärke zu schlecht, kann von dem Logikmodul 13 das zweite V2X-Modul 2.2 abgefragt werden oder umgekehrt. Gleichzeitig kann festgestellt werden, ob die beiden V2X-Module 2.i unterschiedliche V2X-Signale SV2X empfangen, beispielsweise in der Abbiegesituation gemäß Fig. 2. Dazu werden vom Logikmodul 13 auch Logikdaten DL über die Datenverbindung 9 übertragen, wobei die Logikdaten DL eine Steuerung der logischen Einheit aus den mindestens zwei V2X-Modulen 2.i ermöglicht.

Die daraufhin erfolgende Datenverarbeitung kann durch das Logikmodul 13 koordiniert werden, die dann beispielsweise festlegen kann, von welchem V2X-Modul 2.i die Daten D.i an das Platooning-Regelsystem 10 bzw. die jeweilige Anwendungseinheit 10a im Eigenfahrzeug 1 übertragen wird oder über welches V2X-Modul 2.i die jeweiligen Daten D.i über das V2X-Signal SV2X in die Umgebung U übertragen werden. Beispielsweise kann zur Datenverbindung zu einem nachfolgenden Fahrzeug 50 immer das zweite V2X-Modul 2.2 verwendet werden und zur Übertragung nach vorn oder von vorn immer nur das erste V2X-Modul 2.1, wodurch die Zuverlässigkeit der Datenübertragung erhöht wird.

Weiterhin kann das Logikmodul 13 aber auch festlegen, dass die Daten D.i beider V2X-Module 2.i fusioniert werden und fusionierte Daten D ausgegeben werden, um die Genauigkeit zu erhöhen oder um zu Plausibilisieren, wenn beide V2X-Module 2.i dasselbe V2X-Signal SV2X liefern, oder um die Informationsdichte zu erhöhen, wenn beispielsweise in Fig. 2 beide V2X-Module 2.i unterschiedliche V2X-Signale SV2X liefern.

Ergänzend kann aufgrund der fahrzeuginternen Datenverbindung 9 bzw. der logischen Verbindung der V2X-Module 2.i eine weitere Funktionalität ausgebildet werden. Demnach können die Positionen P.i der beiden V2X-Module 2.i, die von den jeweiligen Positionsermittlungseinrichtungen 7.i bereitgestellt werden, dazu verwendet werden, eine Positionierung bzw. eine Orientierung des Eigenfahrzeuges 1 präziser zu ermitteln. Herkömmlicherweise ist jede Positionsermittlung mit einem Fehler behaftet, so dass aus einer ermittelten Position P.i lediglich geschlossen werden kann, dass sich das Eigenfahrzeug 1 bzw. das V2X-Modul 2.i in der Fläche in einem bestimmten Fehlerradius R (s. Fig. 1a, 2) um diese Position P.i befindet. Ist nun die Lage der beiden V2X-Module 2.i im Eigenfahrzeug 1 bekannt, kann aus den beiden ermittelten Positionen P.i und den jeweils zugeordneten Fehlerradien R, die hier für jedes V2X-Modul 2.i bzw. für jede Positionsermittlungseinrichtung 7.i gleich angenommen werden, geschlossen werden, dass sich ein Mittelpunkt M des Eigenfahrzeuges 1 zwischen den beiden Positionen P.i in der Fläche befinden muss. Somit wird die Ermittlung der Positionierung des Eigenfahrzeuges 1 verbessert. Diese Ermittlung kann weiter verbessert werden, wenn bei einem mehrgliedrigen Eigenfahrzeug 1 ein Knickwinkel y bekannt ist. Andererseits kann aus den Positionen P.i der V2X-Module 2.i mit einer gewissen Genauigkeit auch der Knickwinkel γ selbst zum Ermitteln der Orientierung des Eigenfahrzeuges 1 ermittelt werden.

### Bezugszeichenliste (Teil der Beschreibung)

- 1: Eigenfahrzeug
- 1.A: erstes Teilfahrzeug
- 1.B: zweites Teilfahrzeug
- 2.i: V2X-Modul
- 3.i: Antenne
- 4.i: Sendeeinheit
- 5.i: Empfangseinheit
- 6.i: Steuereinheit
- 7.i: Positionsermittlungseinheit
- 8.i: Datenschnittstelle
- 9: Datenverbindung
- 9a: drahtlose Datenverbindung
- 9b: drahtgebundene Datenverbindung
- 10: Platooning-Regelsystem
- 10a: Anwendungseinheit
- 11a: vorderer Bereich des Eigenfahrzeuges 1
- 11b: hinterer Bereich des Eigenfahrzeuges 1
- 12: Verdeckungsbereich
- 12a: Teil-Verdeckungsbereich
- 13: Logikmodul
- 13a: Logikmodul als Software
- 13b: Logikmodul als Hardware
- 14: Fahrbahn
- 15: Objekt
- 50: Fahrzeug in der Umgebung U
- 60: Infrastruktureinrichtung
- 100: V2X-Kommunikationseinheit
- B.i: Sende- und Empfangsbereich des i. V2X-Moduls 2.i
- B: kombinierter Sende- und Empfangsbereich
- D.i: Daten
- D: fusionierte Daten
- DL: Logikdaten
- γ: Knickwinkel
- M: Mittelpunkt des Eigenfahrzeuges 1
- N: Anzahl an V2X-Modulen 2.i
- O: Orientierung
- P.i: Position
- Pos: Positionierung
- R: Fehlerradius
- SP.i: Positions-Signal
- SV2X: V2X-Signal
- U: Umgebung

## Patentansprüche

1. V2X-Kommunikationseinheit (100) zum drahtlosen Senden und/oder Empfangen von Daten (D.i, D) aufweisenden V2X-Signalen (SV2X) in einem Fahrzeug (1), insbesondere Nutzfahrzeug (1), wobei die V2X-Kommunikationseinheit (100) eine Anzahl (N) an V2X-Modulen (2.i) aufweist, wobei jedes V2X-Modul (2.i) mit mindestens einer Antenne (3.i) verbunden ist zum Senden und/oder Empfangen der V2X-Signale (SV2X) in einem Sende- und Empfangsbereich (B.i, B), wobei jedes der V2X-Module (2.i) mindestens aufweist:
- eine Sendeeinheit (4i) zum Modulieren von über die V2X-Signale (SV2X) zu sendenden Daten (D.i, D), und/oder
- eine Empfangseinheit (5.i) zum Demodulieren von über die V2X-Signale (SV2X) empfangenen Daten (D.i, D), und
- eine Datenschnittstelle (8.i) zum Übertragen von über das V2X-Signal (SV2X) zu sendenden und/oder empfangenen Daten (D.i, D),
wobei die V2X-Kommunikationseinheit (100) mindestens zwei örtlich getrennte V2X-Module (2.i) und ein Logikmodul (13) aufweist, wobei das Logikmodul (13) ausgebildet ist, die mindestens zwei V2X-Module (2.i) derartig zu verknüpfen, dass aus den mindestens zwei V2X-Modulen (2.i) eine logische Einheit mit einem kombinierten Sende- und Empfangsbereich (B) ausgebildet wird, in dem die V2X-Signale (SV2X), welche die Daten (D.i, D) aufweisen, gesendet und/oder empfangen werden können, **dadurch gekennzeichnet, dass** das Logikmodul (13) ausgebildet ist, die zu sendenden und/oder die empfangenen Daten (D.i) der mindestens zwei V2X-Module (2.i) in Abhängigkeit davon, ob von einem ersten V2X-Modul keine Daten empfangen werden oder die Signalqualität (C) oder die Signalstärke des von dem ersten V2X-Modul empfangenen Signals zu schlecht ist, auszuwählen und zum Weiterverarbeiten auszugeben, zum logischen Verknüpfen der mindestens zwei V2X-Module (2.i), wobei das Logikmodul (13) das andere der mindestens zwei V2X-Module (2.i) für den Empfang auswählt, wenn von dem ersten V2X-Modul keine Daten empfangen werden können oder die Signalqualität (C) oder die Signalstärke zu schlecht sind.

2. V2X-Kommunikationseinheit (100) nach Anspruch 1, **dadurch gekennzeichnet, dass** die mindestens zwei V2X-Module (2.i) mittels der Datenschnittstellen (8.i) über eine Datenverbindung (9; 9a, 9b) mittelbar oder unmittelbar miteinander verbunden sind zum Übertragen der zu sendenden und/oder zu empfangenden Daten (D.i, D) und/oder von Logikdaten (DL) zum logischen Verknüpfen der mindestens zwei V2X-Module (13) zwischen den mindestens zwei V2X-Modulen (2.i).

3. V2X-Kommunikationseinheit (100) nach Anspruch 2, **dadurch gekennzeichnet, dass** die Datenverbindung (9) eine drahtlose Datenverbindung (9a) und/oder eine drahtgebundene Datenverbindung (9b) ist.

4. V2X-Kommunikationseinheit (100) nach Anspruch 2 oder 3, **dadurch gekennzeichnet, dass** das Logikmodul (13) über die Datenverbindung (9) mit mindestens einem der mindestens zwei V2X-Module (2.i) mittelbar oder unmittelbar verbunden ist zum logischen Verknüpfen der mindestens zwei V2X-Module (2.i) über die Datenverbindung (9; 9a, 9b).

5. V2X-Kommunikationseinheit (100) nach einem der vorhergehenden Ansprüche, **dadurch gekennzeichnet, dass** das Logikmodul (13) die mindestens zwei V2X-Module (2.i) derartig logisch verknüpft, dass ein kombinierter Sende- und Empfangsbereich (B) ausgebildet wird, der die mindestens zwei einzelnen Sende- und Empfangsbereiche (B.1, B.2) erweitert.

6. V2X-Kommunikationseinheit (100) nach einem der vorhergehenden Ansprüche, **dadurch gekennzeichnet, dass** das Logikmodul (13) Bestandteil eines der mindestens zwei V2X-Module (2.i) ist, vorzugsweise Bestandteil einer Steuereinheit (6.i) des jeweiligen V2X-Moduls (2.i), wobei das Logikmodul (13) als Software (13a) und/oder als Hardware (13b) ausgeführt ist.

7. V2X-Kommunikationseinheit (100) nach einem der vorherigen Ansprüche, **dadurch gekennzeichnet, dass** das Logikmodul (13) ausgebildet ist, die zu sendenden und/oder die empfangenen Daten (D.i) der mindestens zwei V2X-Module (2.i) zu fusionieren und als fusionierte Daten (D) auszugeben zum logischen Verknüpfen der mindestens zwei V2X-Module (2.i).

8. V2X-Kommunikationseinheit (100) nach einem der vorhergehenden Ansprüche, **dadurch gekennzeichnet, dass** jedes V2X-Modul (2.i) eine Positionsermittlungseinrichtung (7.i) aufweist, wobei die jeweilige Positionsermittlungseinrichtung (7.i) ausgebildet ist, eine Position (P.i) des jeweiligen V2X-Moduls (2.i) und/oder der Positionsermittlungseinrichtung (7.i) zu ermitteln und als Positions-Signal (SP.i) auszugeben.

9. V2X-Kommunikationseinheit (100) nach Anspruch 8, **dadurch gekennzeichnet, dass** das Logikmodul (13) ausgebildet ist, aus den Positions-Signalen (SP.i) einen Referenzpunkt (M) zu ermitteln, wobei der Referenzpunkt (M) zwischen den ermittelten Positionen (P.i) liegt.

10. V2X-Kommunikationseinheit (100) nach Anspruch 8 oder 9, **dadurch gekennzeichnet, dass** das Logikmodul (13) ausgebildet ist, aus den Positions-Signalen (SP.i) einen Knickwinkel (γ) eines die V2X-Kommunikationseinrichtung (100) aufweisenden mehrgliedrigen Fahrzeuges (1; 1.A, 1.B) zu ermitteln.

11. Fahrzeug (1), insbesondere Nutzfahrzeug (1), mit einer V2X-Kommunikationseinheit (100) nach einem der vorhergehenden Ansprüche, wobei ein erstes V2X-Modul (2.1) und eine damit verbundene erste Antenne (3.1) in einem vorderen Bereich (11a) des Fahrzeug (1) und ein mindestens zweites V2X-Modul (2.2) und eine damit verbundene mindestens zweite Antenne (3.2) in einem hinteren Bereich (11b) des Fahrzeug (1) angeordnet sind zum Ausbilden eines über das gesamte Fahrzeug (1) der Länge (L) ausgedehnten kombinierten Sende- und Empfangsbereiches (B), **dadurch gekennzeichnet, dass** das Fahrzeug (1) mindestens zwei Teilfahrzeuge (1.A, 1.B) aufweist, wobei die Teilfahrzeuge (1.A, 1.B) gelenkig miteinander verbunden sind, wobei in jedem Teilfahrzeug (1.A, 1.B) mindestens ein V2X-Modul (2.i) angeordnet ist.

12. Fahrzeug (1) nach Anspruch 11, **dadurch gekennzeichnet, dass** das Logikmodul (13) der V2X-Kommunikationseinheit (100) ausgebildet ist, aus den Positions-Signalen (SP.i) einen Mittelpunkt (M) des Fahrzeug (1) als Referenzpunkt (M) und/oder einen Knickwinkel (γ) zwischen den beiden Teilfahrzeugen (1.A, 1.B) zu ermitteln.

## Claims

1. V2X communication unit (100) for wirelessly transmitting and/or receiving, in a vehicle (1), in particular a commercial vehicle (1), V2X signals (SV2X) having data (D.i, D), wherein the V2X communication unit (100) has a number (N) of V2X modules (2.i), wherein each V2X module (2.i) is connected to at least one antenna (3.i) in order to transmit and/or receive the V2X signals (SV2X) in a transmission and reception range (B.i, B), wherein each of the V2X modules (2.i) has at least:
- a transmission unit (4i) for modulating data (D.i, D) to be transmitted via the V2X signals (SV2X), and/or
- a reception unit (5.i) for demodulating data (D.i, D) received via the V2X signals (SV2X), and
- a data interface (8.i) for transferring data (D.i, D) received and/or to be transmitted via the V2X signal (SV2X),
wherein the V2X communication unit (100) has at least two spatially separated V2X modules (2.i) and a logic module (13), wherein the logic module (13) is designed to link the at least two V2X modules (2.i) in such a way that a logical unit with a combined transmission and reception range (B) is formed from the at least two V2X modules (2.i), in which range the V2X signals (SV2X) having the data (D.i, D) can be transmitted and/or received, **characterized in that** the logic module (13) is designed to select the data (D.i) to be transmitted and/or the received data of the at least two V2X modules (2.i) on the basis of whether no data are received by a first V2X module or the signal quality (C) or the signal strength of the signal received by the first V2X module is too poor, and to output said data for further processing in order to link the at least two V2X modules (2.i) in terms of logic, wherein the logic module (13) selects the other one of the at least two V2X modules (2.i) for reception if no data can be received by the first V2X module or the signal quality (C) or the signal strength is too poor.

2. V2X communication unit (100) according to claim 1, **characterized in that** the at least two V2X modules (2.i) are connected to each other by means of the data interfaces (8.i) directly or indirectly via a data connection (9; 9a, 9b), in order to transfer, between the at least two V2X modules (2.i), the data (D.i, D) to be transmitted and/or received and/or logic data (DL) for linking the at least two V2X modules (13) in terms of logic.

3. V2X communication unit (100) according to claim 2, **characterized in that** the data connection (9) is a wireless data connection (9a) and/or a wired data connection (9b).

4. V2X communication unit (100) according to claim 2 or 3,
**characterized in that** the logic module (13) is connected to at least one of the at least two V2X modules (2.i) directly or indirectly via the data connection (9), in order to link the at least two V2X modules (2.i) in terms of logic via the data connection (9; 9a, 9b).

5. V2X communication unit (100) according to any of the preceding claims,
**characterized in that** the logic module (13) links the at least two V2X modules (2.i) in terms of logic in such a way that a combined transmission and reception range (B) is formed which expands the at least two individual transmission and reception ranges (B.1, B.2).

6. V2X communication unit (100) according to any of the preceding claims,
**characterized in that** the logic module (13) is a constituent part of one of the at least two V2X modules (2.i), preferably a constituent part of a control unit (6.i) of the particular V2X module (2.i), wherein the logic module (13) is implemented as software (13a) and/or as hardware (13b).

7. V2X communication unit (100) according to any of the preceding claims,
**characterized in that** the logic module (13) is designed to fuse the data (D.i) to be transmitted and/or the received data of the at least two V2X modules (2.i) and output it as fused data (D), in order to link the at least two V2X modules (2.i) in terms of logic.

8. V2X communication unit (100) according to any of the preceding claims,
**characterized in that** each V2X module (2.i) has a position determination device (7.i), wherein each position determination device (7.i) is designed to determine a position (P.i) of the relevant V2X module (2.i) and/or of the position determination device (7.i) and output it as a position signal (SP.i).

9. V2X communication unit (100) according to claim 8, **characterized in that** the logic module (13) is designed to determine a reference point (M) from the position signals (SP.i), wherein the reference point (M) lies between the determined positions (P.i).

10. V2X communication unit (100) according to claim 8 or 9,
**characterized in that** the logic module (13) is designed to determine, from the position signals (SP.i), an articulation angle (γ) of a multi-unit vehicle (1; 1.A, 1.B) having the V2X communication device (100).

11. Vehicle (1), in particular a commercial vehicle (1), comprising a V2X communication unit (100) according to any of the preceding claims, wherein a first V2X module (2.1) and a first antenna (3.1) connected thereto are arranged in a front region (11a) of the vehicle (1) and at least a second V2X module (2.2) and at least a second antenna (3.2) connected thereto are arranged in a rear region (11b) of the vehicle (1), in order to form a combined transmission and reception range (B) extended over the entire vehicle (1) of length (L), **characterized in that** the vehicle (1) has at least two sub-vehicles (1.A, 1.B), wherein the sub-vehicles (1.A, 1.B) are articulated to each other, wherein at least one V2X module (2.i) is arranged in each sub-vehicle (1.A, 1.B).

12. Vehicle (1) according to claim 11, **characterized in that** the logic module (13) of the V2X communication unit (100) is designed to determine, from the position signals (SP.i), a center point (M) of the vehicle (1) as a reference point (M) and/or an articulation angle (γ) between the two sub-vehicles (1.A, 1.B).

## Revendications

1. Unité de communication de véhicule à X (100) pour l'émission et/ou la réception sans fil de signaux de véhicule à X (SV2X) présentant des données (D.i, D) dans un véhicule (1), en particulier un véhicule utilitaire (1), dans laquelle l'unité de communication de véhicule à X (100) présente un certain nombre (N) de modules de véhicule à X (2.i), dans laquelle chaque module de véhicule à X (2.i) est connecté à au moins une antenne (3.i) pour l'émission et/ou la réception des signaux de véhicule à X (SV2X) dans une zone d'émission et de réception (B.i, B), dans laquelle chacun des modules de véhicule à X (2.i) présente au moins :
- une unité d'émission (4i) pour la modulation des données (D.i, D) à émettre par l'intermédiaire des signaux de véhicule à X (SV2X), et/ou
- une unité de réception (5.i) pour la démodulation des données (D.i, D) reçues par l'intermédiaire des signaux de véhicule à X (SV2X), et
- une interface de données (8.i) pour la transmission de données (D.i, D) à émettre et/ou reçues par l'intermédiaire du signal de véhicule à X (SV2X),
dans laquelle l'unité de communication de véhicule à X (100) présente au moins deux modules de véhicule à X (2.i) séparés localement et un module logique (13), dans laquelle le module logique (13) est configuré pour combiner les au moins deux modules de véhicule à X (2.i) de telle sorte que, à partir des au moins deux modules de véhicule à X (2.i), une unité logique comportant une zone d'émission et de réception combinée (B) est réalisée et dans laquelle les signaux de véhicule à X (SV2X), lesquels présentent les données (D.i, D), peuvent être émis et/ou reçus, **caractérisée en ce que** le module logique (13) est configuré pour sélectionner les données (D.i) à émettre et/ou reçues des au moins deux modules de véhicule à X (2.i) en fonction du fait qu'aucune donnée n'est reçue par un premier module de véhicule à X ou que la qualité de signal (C) ou l'intensité de signal du signal reçu par le premier module de véhicule à X est trop faible, et de les distribuer pour le traitement ultérieur pour la combinaison logique des au moins deux modules de véhicule à X (2.i), dans laquelle le module logique (13) sélectionne l'autre des au moins deux modules de véhicule à X (2.i) pour la réception lorsqu'aucune donnée ne peut être reçue par le premier module de véhicule à X ou lorsque la qualité de signal (C) ou l'intensité de signal est trop faible.

2. Unité de communication de véhicule à X (100) selon la revendication 1,
**caractérisée en ce que** les au moins deux modules de véhicule à X (2.i) sont connectés directement ou indirectement entre eux au moyen des interfaces de données (8.i) par l'intermédiaire d'une connexion de données (9 ; 9a, 9b) pour la transmission des données (D.i, D) à émettre et/ou à recevoir et/ou des données logiques (DL) pour la combinaison logique des au moins deux modules de véhicule à X (13) entre les au moins deux modules de véhicule à X (2.i).

3. Unité de communication de véhicule à X (100) selon la revendication 2,
**caractérisée en ce que** la connexion de données (9) est une connexion de données sans fil (9a) et/ou une connexion de données filaire (9b).

4. Unité de communication de véhicule à X (100) selon la revendication 2 ou 3, **caractérisée en ce que** le module logique (13) est connecté directement ou indirectement à au moins l'un des au moins deux modules de véhicule à X (2.i) par l'intermédiaire de la connexion de données (9) pour la combinaison logique des au moins deux modules de véhicule à X (2.i) par l'intermédiaire de la connexion de données (9 ; 9a, 9b).

5. Unité de communication de véhicule à X (100) selon l'une des revendications précédentes, **caractérisée en ce que** le module logique (13) combine logiquement les au moins deux modules de véhicule à X (2.i) de telle sorte qu'une zone d'émission et de réception combinée (B) est réalisée, laquelle étend les au moins deux zones d'émission et de réception (B.1, B.2) individuelles.

6. Unité de communication de véhicule à X (100) selon l'une des revendications précédentes, **caractérisée en ce que** le module logique (13) fait partie intégrante de l'un des au moins deux modules de véhicule à X (2.i), de préférence fait partie intégrante d'une unité de commande (6.i) du module de véhicule à X (2. i) respectif, dans laquelle le module logique (13) est conçu comme un logiciel (13a) et/ou un matériel (13b).

7. Unité de communication de véhicule à X (100) selon l'une des revendications précédentes, **caractérisée en ce que** le module logique (13) est configuré pour fusionner les données (D.i) à émettre et/ou reçues des au moins deux modules de véhicule à X (2.i) et pour les distribuer en tant que données fusionnées (D) pour la combinaison logique des au moins deux modules de véhicule à X (2.i).

8. Unité de communication de véhicule à X (100) selon l'une des revendications précédentes, **caractérisée en ce que** chaque module de véhicule à X (2.i) présente un dispositif de détermination de position (7.i), dans laquelle le dispositif de détermination de position (7.i) respectif est configuré pour déterminer une position (P.i) du module de véhicule à X (2.i) respectif et/ou du dispositif de détermination de position (7.i) et pour la distribuer en tant que signal de position (SP.i).

9. Unité de communication de véhicule à X (100) selon la revendication 8,
**caractérisée en ce que** le module logique (13) est configuré pour déterminer un point de référence (M) à partir des signaux de position (SP.i), dans laquelle le point de référence (M) est situé entre les positions (P.i) déterminées.

10. Unité de communication de véhicule à X (100) selon la revendication 8 ou 9, **caractérisée en ce que** le module logique (13) est configuré pour déterminer, à partir des signaux de position (SP.i), un angle d'articulation (γ) d'un véhicule à plusieurs éléments (1 ; 1.A, 1.B) présentant le dispositif de communication de véhicule à X (100).

11. Véhicule (1), en particulier véhicule utilitaire (1), comportant une unité de communication de véhicule à X (100) selon l'une des revendications précédentes, dans lequel un premier module de véhicule à X (2.1) et une première antenne (3.1) connectée à celui-ci sont disposés dans une zone avant (11a) du véhicule (1) et au moins un second module de véhicule à X (2.2) et au moins une seconde antenne (3.2) connectée à celui-ci sont disposés dans une zone arrière (11b) du véhicule (1) pour la réalisation d'une zone d'émission et de réception combinée (B) se prolongeant sur l'ensemble de la longueur (L) du véhicule (1), **caractérisé en ce que** le véhicule (1) présente au moins deux véhicules partiels (1.A, 1.B), dans lequel les véhicules partiels (1.A, 1.B) sont reliés entre eux de manière articulée, dans lequel au moins un module de véhicule à X (2.i) est disposé dans chaque véhicule partiel (1.A, 1.B).

12. Véhicule (1) selon la revendication 11, **caractérisé en ce que** le module logique (13) de l'unité de communication de véhicule à X (100) est configuré pour déterminer, à partir des signaux de position (SP.i), un point central (M) du véhicule (1) comme point de référence (M) et/ou un angle d'articulation (γ) entre les deux véhicules partiels (1.A, 1.B).
